(19) Europäisches Patentamt

European Patent Office

Office européen des brevets

(11) **EP 1 192 851 A1**

(12) **EUROPEAN PATENT APPLICATION**
published in accordance with Art. 158(3) EPC

(43) Date of publication:
**03.04.2002 Bulletin 2002/14**

(21) Application number: **00917468.1**

(22) Date of filing: **25.04.2000**

(51) Int Cl.7: **A01G 1/00**

(86) International application number:
**PCT/JP00/02709**

(87) International publication number:
**WO 00/65898 (09.11.2000 Gazette 2000/45)**

(84) Designated Contracting States:
**AT BE CH CY DE DK ES FI FR GB GR IE IT LI LU MC NL PT SE**

(30) Priority: **30.04.1999 JP 12476999**

(71) Applicant: **Ueno Seiyaku Kabushiki Kaisha Osaka-shi Osaka 541-8543 (JP)**

(72) Inventors:
• **UENO, Ryuzo**
  **Nishinomiya-shi, Hyogo 662-0038 (JP)**

• **TABATA, Akihiko**
  **Kawanishi-shi, Hyogo 666-0122 (JP)**
• **CHIKAMORI, Masahiro**
  **Nishinomiya-shi, Hyogo 662-0085 (JP)**

(74) Representative:
**Denison, Christopher Marcus et al
Mewburn Ellis
York House
23 Kingsway
London WC2B 6HP (GB)**

(54) **METHOD FOR CULTIVATING $i(ERIMOSHOZU), AND METHODS FOR HARVESTING AND STORING ITS SEED**

(57) The present invention provides a method for cultivating Erimo-shozu, a variety of Adzuki seeds, characterized in that the seeds are cultivated under the condition wherein the average minimum temperature for 30 days before harvest is 18.5°C or less and the average maximum temperature for the same is 29.0°C or less; a method for harvesting Erimo-shozu seeds, characterized in that the seeds are harvested at the time period when the water content of the seed in the lowermost pod of a plant is 10% or more; and a method for storing Erimo-shozu seeds, characterized in that the water content of the seed is kept at 10% or more during storage by preventing a decrease in the water content.

Erimo-shozu seeds having quality equivalent to that produced in Hokkaido can be produced even in a low latitude area.

FIG.1

Correlation between hard beans and normal beans

## Description

### Field of the Invention

The present invention relates to a method for cultivating Erimo-shozu and a method for harvesting and storing the seeds thereof. These methods allow the production of high-quality seeds of Erimo-shozu even in a low latitude district. Seeds of Erimo-shozu cultivated, harvested and stored according to the present invention possess high-quality equivalent to those cultivated in a high latitude district such as Hokkaido, though the high-quality seeds could have been obtained only in a high latitude area.

### Background of the Invention

Adzuki beans are leguminous annual herb crops. They are generally red or reddish brown, and some of the varieties are brown or white. The varieties include Erimo, Sahoro, Hayate, Kotobuki, Akenowase, Hatsune and the like. Adzuki beans are consumed mainly as bean-paste, ingredients for confectionary, in a large quantity in Japan. The cultivation area is limited since their quality and yields are largely affected by weather conditions such as the amount of solar radiation and of precipitation. In Japan 80% or more of the gross domestic yield of Adzuki beans are cultivated in Hokkaido where weather conditions required for Adzuki beans e.g., the amount of solar radiation or of precipitation are satisfied.
To meet the demand of developing a variety suitable for cultivation in a relatively cold district, such as Hokkaido, Erimo-shozu (Adzuki Norin 4-go) has been bred from Adzuki plant that is generally sensitive to cold weather. Adzuki beans determined as the one with high quality possess characteristic features, such as good color, thin seed coats, and a reduced incidence of undesirable seeds called "hard beans" or immature seeds, those of which cannot be cooked in tender. In addition to have such features superior to other varieties, Erimo-shozu possesses additional features of strong resistance to cool weather, and improved yields. Continuous effort to breed Adzuki beans over the past 15 years has failed to establish such a variety having features superior to Erimo-shozu.
Breeding of a variety having qualities superior to Erimo-shozu would still be difficult because of long time period required for establishment of a new variety and of the shortage of manpower for breeding. Now the Erimo-shozu is a standard variety in the art.
Thus, a demand for Erimo-shozu is high among Adzuki beans. Now its gross yield accounts for 83% (% planted area) of Adzuki beans cultivated in Hokkaido. Although such a high demand for Erimo-shozu exists, the cultivation district is limited to Hokkaido and almost no Erimo-shozu is cultivated in other prefectures in Japan. This is because the cultivation of Erimo-shozu in prefectures other than Hokkaido results in harvest of reddish black seeds, which lose their original color tone. There is a report that experimental cultivation of Erimo-shozu in Ni-gata prefecture has caused the harvest of blackish seeds, whose color is different from the original color. Such seed color impairs its commercial importance, particularly reduces the worth of the Adzuki bean used for bean-paste.
Adzuki beans are also produced in countries other than Japan, for example in China, Taiwan, Canada, the United States of America, and Australia. In Japan domestic demand of Adzuki outpaces the supply. This shortage is covered by importing of Adzuki beans from these countries. However, Adzuki beans imported are different varieties and have different taste compared to those produced in Japan, and darker than Erimo-shozu. Thus the imported Adzuki beans are differentiated from the domestic Adzuki beans.
Since good-quality Erimo-shozu is produced only in Hokkaido, a poor crop situation of Erimo-shozu in Hokkaido causes problems including a sudden rise in prices due to the short supply. Therefore, stable supply of good-quality Erimo-shozu is required.

### Problems to be solved by the Invention

The inventors conducted experimental cultivation of Erimo-shozu in Thailand and the produced seeds were blackish red, similar to those produced in the prefectures other than Hokkaido. In addition, many hard beans were found among the beans harvested.
If the cultivation of Erimo-shozu in a lower latitude area, differing from a higher latitude area in the weather conditions, becomes possible, stable supply of Erimo-shozu can be realized. The benefits from such a breakthrough would be immesurable. The present invention has been achieved against such technical background. The purpose of the invention is to provide means to produce good-quality Erimo-shozu even in a lower latitude area and to realize stable supply of such Erimo-shozu.

**Means to solve the Problems**

As a result of diligent investigation to solve the above described problems, the inventors have found that the average minimum temperature and the average maximum temperature in a certain period before harvest are closely related to the color tone of the seeds and that the water content of the seed is closely related to the incidence of hard beans. Based on these findings, the inventors have completed the present invention.

The first invention is a method for cultivating Erimo-shozu in an area between 25° north latitude and 25° south latitude, characterized in that the seeds are cultivated under the condition wherein the average minimum temperature for 30 days before harvest is 18.5°C or less, and the average maximum temperature is 29.0°C or less.

The second invention is a method for harvesting seeds from Erimo-shozu cultivated according to the above described method, characterized in that the seeds are harvested at a time period when the water content of the seed in the pod localized lowest among the pods are 10% or more.

The third invention is a method for storing the seeds of Erimo-shozu, characterized in that the water content of the seeds of Erimo-shozu is kept at 10% or more during storage by preventing the decrease in the water content.

**Brief Description of Drawing.**

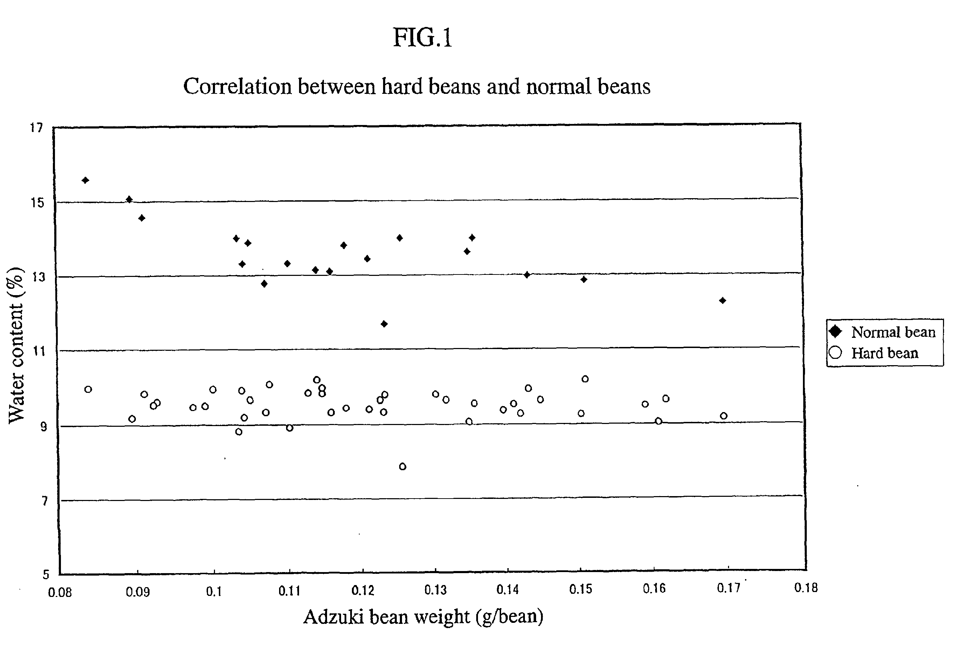

Figure 1 shows the water content for hard beans and normal beans.

**Description of the Invention**

Detailed description of the present invention will be given below.

(1) Method for cultivating Erimo-shozu

A method for cultivating Erimo-shozu according to the present invention is characterized in that the seeds are cultivated under the condition wherein the average minimum temperature for 30 days before harvest is 18.5°C or less and the average maximum temperature for the same is 29.0°C or less.

Any cultivation area between 25° north latitude and 25° south latitude can be included. Preferable areas are situated between the tropic of Cancer (23.27° north latitude) and the tropic of Capricorn (23.27° south latitude). More preferable areas are situated between 17° and 21° north latitude, or between 17° and 21° south latitude.

A certain temperature is required for cultivation only for 30 days before harvest. Temperatures for periods other than those specified can be optionally set within a range that does not adversely affect the growth of the plant. That is, the average minimum temperature for 30 days before harvest may be at 18.5°C or less and the average maximum temperature for the same may be at 29.0°C or less. Preferably for cultivation, the average minimum temperature is at 17.0°C or less and the average maximum temperature is at 28.0°C or less. More preferably, the average minimum temperature is at 16.0°C or less and the average maximum temperature is at 26.5°C or less. The lowest limit for the average minimum temperature or for the average maximum temperature can be optionally set within a range that does not adversely affect the growth of the plant.

Methods for keeping such temperature condition in a low latitude area can include a method for cultivating the seeds in alpine regions where the temperature is lower than that in flatland and a method for cultivating indoors where the temperature is controlled.

Seeds produced by these methods are light in color, which is the original color tone of Erimo-shozu. That is, the L* value for the seed color is 22 or more, b* value 11 or more, preferably the L* value is 23 or more, and b* value is 12 or more, more preferably, the L* value 24 or more, and the b* value 13 or more. In the present invention L* values and b* values are measured by a colorimeter or a color-difference meter based on L*a*b*color system. The L* value indicates lightness and b* value yellowness. A preferable colorimeter or a color-difference meter is CR-300 (manufactured by Minolta Co.,Ltd) or its compatible. Each of L* values and b* values is obtained by mixing seeds produced from the entire field, extracting samples, measuring the color tone using the colorimeter, and calculating the average.

(2) Method for harvesting Erimo-shozu seeds

A method for cultivating Erimo-shozu seeds according to the present invention is characterized in that the seeds are harvested when the water content of the seed in the lowermost pod of a plant is 10% or more. The harvest time is, but not limited to, the time when the water content of the seed in the lowermost pod of a plant is 10% or more. Too early harvesting can lead to immature seeds in pods localized on the upper portion. Therefore, harvest is preferably done at a time period when the water content of the seed in the lowermost pod of a plant is 10% or more and the seeds appropriately mature in the pods localized on the upper portion.

The incidence of hard beans can be lowered by harvesting the seeds according to the method.

(3) Method for storing Erimo-shozu seed

A method for storing Erimo-shozu seeds according to the present invention is characterized in that the water content of the seed of Erimo-shozu is kept at 10% or more during storage by preventing the decrease in the water content.

Any Adzuki beans can be stored, however, the Adzuki beans cultivated or harvested by the above described methods can be stored more effectively.

The water content of the seed is kept at 10% or more, or preferably at 11 % or more, and more preferably at 12% or more.

Means to prevent the decrease in the water content of the seed can include, but not limited to, a method wherein the seeds are stored indoors or containers which are kept at constant humidity, or a method wherein the seeds are stored in an airtight container or a sealed bag.

The occurrence of hard beans can be inhibited by storing seeds after harvest in this manner.

**Examples**

Example 1

Correlation between cultivation district and color tone
Method: Erimo-shozu seeds were sown in 11 locations (A to K districts) in Thailand from the middle to the end of August and were harvested from the end of October to the middle of November. Part of the seeds harvested is picked out for sampling (seeds that exhibited peculiar color or peculiar shape were excluded) and the color tone was measured using a colorimeter CR-300 manufactured by Minolta Co., Ltd.

Results: Tables 1 and 2 show the height above sea level, latitude, measured color tone, average maximum temperature and average minimum temperature for 30 days before harvest for each cultivating district. A correlation between L* value and average maximum temperature and the one between L* value and average minimum temperature were correlation coefficient of -0.76 and -0.97, respectively. A correlation between b* value and average maximum temperature and the one between b* value and average minimum temperature were correlation coefficients of -0.88 and -0.78, respectively. For all of them, significant differences were seen at the ratio of risk of 1% or less.

Table 1

| Temperature and color tone for 30 days before harvest (in order of L* value) | | | | | | |
|---|---|---|---|---|---|---|
| Location for cultivation | Height above sea level | Latitude (North latitude) | Color tone | | Average maximum temp. for 30 days before harvest (°C) | Average minimum temp. for 30 days before harvest (°C) |
| | | | L* | b* | | |
| A | 1,400 | 20 | 27.7 | 14.3 | 22.2 | 10.4 |
| B | 1,000 | 18.6 | 25.2 | 13.0 | 26.5 | 15.0 |
| C | 680 | 19.6 | 23.9 | 11.4 | 27.4 | 15.9 |
| D | 1,360 | 19.2 | 23.1 | 11.9 | 22.4 | 16.4 |
| E | 470 | 19.5 | 22.3 | 9.9 | 28.9 | 18.3 |
| F | 1,280 | 18.5 | 22.2 | 11.2 | 26.5 | 18.3 |
| G | 1,300 | 18.5 | 22.0 | 10.8 | 29.5 | 18.1 |
| H | 520 | 20.2 | 21.3 | 11.0 | 31.0 | 19.8 |
| I | 800 | 19.3 | 20.9 | 11.2 | 28.0 | 20.9 |

Table 1   (continued)

| Temperature and color tone for 30 days before harvest (in order of L* value) | | | | | | |
|---|---|---|---|---|---|---|
| Location for cultivation | Height above sea level | Latitude (North latitude) | Color tone | | Average maximum temp. for 30 days before harvest (°C) | Average minimum temp. for 30 days before harvest (°C) |
| | | | L* | b* | | |
| J | 440 | 20.4 | 20.7 | 9.1 | 30.6 | 18.4 |
| K | 500 | 18.7 | 20.2 | 6.5 | 35.6 | 21.0 |
| Correlation coefficient of L* value and the average maximum temperature: -0.76 Regression equation: y = -1.31x + 57.8 Correlation coefficient of L* value and the average minimum temperature: -0.97 Regression equation: y = -1.32x + 47.4 | | | | | | |

Table 2

| Temperature and color tone for 30 days before harvest (in order of b* value) | | | | | | |
|---|---|---|---|---|---|---|
| Location for cultivation | Height above sea level | Latitude (North latitude) | Color tone | | Average maximum temp. for 30 days before harvest (°C) | Average minimum temp. for 30 days before harvest (°C) |
| | | | L* | b* | | |
| A | 1,400 | 20.0 | 27.7 | 14.3 | 22.2 | 10.4 |
| B | 1,000 | 18.6 | 25.2 | 13.0 | 26.5 | 15.0 |
| D | 1,360 | 19.2 | 23.1 | 11.9 | 22.4 | 16.4 |
| C | 680 | 19.6 | 23.9 | 11.4 | 27.4 | 15.9 |
| F | 1,280 | 18.5 | 22.2 | 11.2 | 26.5 | 18.3 |
| I | 800 | 19.3 | 20.9 | 11.2 | 28.0 | 20.9 |
| H | 520 | 20.2 | 21.3 | 11.0 | 31.0 | 19.8 |
| G | 1,300 | 18.5 | 22.0 | 10.8 | 29.5 | 18.1 |
| E | 470 | 19.5 | 22.3 | 9.9 | 28.9 | 18.3 |
| J | 440 | 20.4 | 20.7 | 9.1 | 30.6 | 18.4 |
| K | 500 | 18.7 | 20.2 | 6.5 | 35.6 | 21.0 |
| Correlation coefficient of b* value and the average maximum temperature: -0.88 Regression equation: y = -1.66x + 46.2 Correlation coefficient of b* value and the average minimum temperature : - 0.78 Regression equation: y = -1.16x + 30.2 | | | | | | |

Example 2

Relation between water content and incidence of hard beans

Water absorption test for Adzuki beans

Method: (1) Each of sixty Erimo-shozu beans harvested in Thailand and having normal appearance were weighed accurately (Adzuki bean weight:a). (2) One Adzuki bean each was added together with about 1ml of ion exchange water into a tube and allowed to stand for 24 hours at room temperature. (3) Each Adzuki bean was then removed, the surface was wiped to remove water, and then the bean was weighed accurately (Adzuki bean weight after absorption:b). (4) After absorption, the Adzuki beans were dried under normal pressure at 105°C for 20 hours. Then the water content of the beans after the absorption were measured based on the weight loss on drying (water content of Adzuki bean after absorption:c). (5) Based on the above results, the water content (d) and moisture percentage (e) for the original Adzuki bean was obtained by the following equation.

$$d = a-(b-c) \qquad e = d/a \times 100$$

Results: Table 3 and Figure 1 show results totaled separately for Adzuki beans that absorbed (normal bean) and for beans that absorbed no water (hard bean). As clearly shown in Table 3 and Figure 1 there is a large difference in water content between the normal beans and the hard beans. The water content for the hard beans were far lower than that of the normal beans as expected.

Table 3

| | Number of beans | Weight (g) | Water content (%) |
|---|---|---|---|
| Normal beans | 19 | 0.12±0.02 | 13.55±0.90 |
| Hard beans | 41 | 0.13±0.02 | 9.52±0.42 |

The results of water absorption test for Adzuki beans clearly indicated that the formation of hard beans depend on the water content of the Adzuki bean after harvest. It was confirmed that the formation of hard beans can be inhibited by keeping the water content of the Adzuki beans at 10% or more during storage. Further, the formation of hard beans can also be inhibited by harvesting the beans at the time period when the water content of the bean in the pod is 10% or more.

**Effect of the Invention**

According to the methods of the present invention, Adzuki beans with quality equivalent to Erimo-shozu produced in Hokkaido can be produced even in a low latitude area.

**Claims**

1. A method for cultivating Erimo-shozu an area situated between 25° north latitude and 25° south latitude, **characterized in that** Erimo-shozu is cultivated under conditions wherein the average minimum temperature for 30 days before the harvest of seeds is less than 18.5°C and the average maximum temperature for the same is less than 29.0°C.

2. The method for cultivating Erimo-shozu of claim 1 **characterized in that** the cultivation area is situated between 17° and 21° north latitude or between 17° to 21° south latitude.

3. The method for cultivating Erimo-shozu of claim 1 or 2 **characterized in that** the color of harvested seeds have L* value of 22 or more, and b* value of 11 or more.

4. A method for harvesting seeds from Erimo-shozu that is cultivated by the method according to any one of claims 1 to 3, **characterized in that** the seeds are harvested from Erimo-shozu at the time period when the water content of the seed in the lowermost pod of a plant is 10% or more.

5. A method for storing the seed of Erimo-shozu **characterized in that** the water content of the seeds of Erimo-shozu is kept at 10% or more during storage by preventing the decrease in the water content.

6. The method for storing the seeds from Erimo-shozu of claim 5 **characterized in that** the seeds to be stored are those harvested from Erimo-shozu that is cultivated by the method according to either one of claim 1 or 3.

7. The method for storing the seeds of Erimo-shozu of claim 5 **characterized in that** the seeds to be stored are of Erimo-shozu harvested by the method of claim 4.

FIG.1

Correlation between hard beans and normal beans

## INTERNATIONAL SEARCH REPORT

| | International application No. |
|---|---|
| | PCT/JP00/02709 |

A. CLASSIFICATION OF SUBJECT MATTER
   Int.Cl⁷   A01G1/00

According to International Patent Classification (IPC) or to both national classification and IPC

B. FIELDS SEARCHED

Minimum documentation searched (classification system followed by classification symbols)
   Int.Cl⁷   A01G1/00

Documentation searched other than minimum documentation to the extent that such documents are included in the fields searched

Electronic data base consulted during the international search (name of data base and, where practicable, search terms used)
   JOIS
   BIOSIS

C. DOCUMENTS CONSIDERED TO BE RELEVANT

| Category* | Citation of document, with indication, where appropriate, of the relevant passages | Relevant to claim No. |
|---|---|---|
| A | Nogyo Gijutsu, Vol.37., No.1 (1982), pp.31-33 | 1-7 |
| A | Nihon Sakumotsu Gakkai Kiji, Vol.59-separate volume 2 (1990), pp.155-156 | 1-7 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 July, 2000 (21.07.00) | 01 August, 2000 (01.08.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

8